# EUROPÄISCHE PATENTANMELDUNG

(11) **EP 3 590 874 A1**
(43) Veröffentlichungstag der Anmeldung: **08.01.2020**
(21) Anmeldenummer: 19191685.7
(22) Anmeldetag: 20.01.2015
(51) Int. Cl.: B65G 54/02, B67C 7/00, B67C 3/22

(54) **VORRICHTUNG UND VERFAHREN ZUM TRANSPORT VON BEHÄLTERN INNERHALB VON ISOLATORMASCHINEN**

(30) Priorität: 27.02.2014 DE 102014102630
(62) Teilanmeldung aus: 15700596.8
(71) Anmelder: KRONES Aktiengesellschaft, 93073 Neutraubling (DE)
(72) Erfinder: Laumer, Roland, 93073 Neutraubling (DE)
(74) Vertreter: Grünecker Patent- und Rechtsanwälte PartG mbB

(57) **Zusammenfassung**

Die vorliegende Erfindung stellt eine Vorrichtung zur Behälterbehandlung und/oder Behälterherstellung mit einem Reinraum (100) und einer Transporteinrichtung zum Transport von Behältern und / oder Vorformlingen entlang einer innerhalb des Reinraums (100) angeordneten Prozessstrecke, wobei der Reinraum (100) ein den Reinraum (100) von einem Außenraum trennendes Wandelement (125, 225) aufweist; wobei die Transporteinrichtung eine innere Transportbahn mit einem inneren Führungselement (130, 230, 530) aufweist, das innerhalb des Reinraums (100) entlang des Wandelements (125, 225) angeordnet ist, und an dem mindestens ein inneres Transportelement (240, 340, 540, 640) zum Transport eines oder mehrerer Behälter oder Vorformlinge bewegbar angeordnet ist; wobei die Transporteinrichtung ein Antriebssystem (120) mit wenigstens einem parallel zum inneren Führungselement angeordneten Linearmotorstrang aufweist, das außerhalb des Reinraums (100) angeordnet und dazu ausgebildet ist, mittels magnetischer oder elektromagnetischer Wechselwirkung durch das Wandelement (125, 225) hindurch das innere Transportelement (240, 340, 540, 640) entlang des inneren Führungselements (130, 230, 530) zu bewegen.

## Beschreibung

### Gebiet der Erfindung

Die vorliegende Erfindung betrifft eine Vorrichtung und ein Verfahren zum Transport von Behältern und/oder Vorformlingen innerhalb eines Reinraums einer Behälterbehandlungs- und/oder Behälterherstellungsanlage.

### Stand der Technik

Häufig werden Behälterbehandlungsanlagen und Behälterherstellungsanlagen in sog. Isolatorbauweise ausgeführt, um eine Anlage aseptisch betreiben zu können. Insbesondere ist es für viele Getränke erforderlich, diese unter aseptischen Bedingungen abzufüllen. Dabei ist es bekannt, dass ein Sterilisationsprozess für das aseptische Abfüllen mit der Sterilisation der bereits fertig gestellten Behälter, insbesondere Flaschen, in einem dafür vorgesehenen Reinraum beginnt.

Im Falle von Kunststoffbehältern, insbesondere Kunststofflaschen, ist es jedoch erstrebenswert, bereits einen Teil der Herstellungsprozesse zur Herstellung der Kunststoffbehälter innerhalb des Reinraums durchzuführen. So kann beispielsweise durch Verlegen des Umformens der Kunststoffbehälter, beispielsweise durch Blasen von Vorformlingen zu Flaschen, in den Reinraum Material und Energie eingespart werden, da sich Vorformlinge mit weniger Desinfektionsmittel bzw. Energie zur Bestrahlung bzw. Erwärmung sterilisieren lassen als die fertig gestellten Flaschen, welche insbesondere einen schwer zu sterilisierenden Hohlraum aufweisen.

Ein Reinraum einer solchen Behälterbehandlungs- und/oder -herstellungsanlage wird im Stand der Technik in Form eines sog. Isolators realisiert, welcher einen definierten sterilen Teil der Prozessstrecke von der Umgebung im Allgemeinen lüftungstechnisch trennt. Beispielsweise kann der Isolator durch das Einbringen von sterilisierter Luft auf einem höheren Druckniveau als die Umgebung gehalten werden, wodurch das Eindringen von Mikroorganismen verhindert werden kann. Der sterile Teil der Prozessstrecke erstreckt sich dabei im Allgemeinen bis zu einer Verschließeinrichtung für die befüllten Behälter.

Eine lüftungstechnische Trennung des Reinraums von der Umgebung erfordert jedoch ein hohes Maß an Hygienemaßnahmen im Umfeld einer solchen aseptischen Anlage. Soll für die Herstellung von Kunststoffbehältern zusätzlich das Spritzen der Vorformlinge in der Isolator einbezogen werden, ist eine lüftungstechnische Lösung nicht mehr machbar, da das Werkzeug zum Spritzen der Vorformlinge geschlossen und geöffnet werden muss. Es ist besonders keine Trennung des Reinraums nicht mehr möglich, bei denen nur ein Teil des Behälters, sich im Reinraum befindet. Eine solche Trennung ist beispielsweise bei einem Neckring-Isolator vorhanden, bei dem der Greifwulst am Behälterhals die Trennebene zwischen Reinraum und Umgebung ist.

Zudem bedingt die Unterbringung einer aus mehreren Prozessschritten bestehenden Prozessstrecke sowohl die Notwendigkeit des Transports der Behälter und/oder Vorformlinge entlang der Prozessstrecke als auch des gesteuerten Bewegens von Teilen innerhalb des Prozessraums, beispielsweise beim Öffnen und Schließen von Blasformen sowie bei der Übergabe von Vorformlingen oder Behältern von einer Prozesseinheit an eine andere.

Mechanisch bewegte Teile und deren zugehörige Antriebselemente, ob zum Transport oder zur Umformung bzw. zum Handling der Behälter, müssen jedoch im Allgemeinen geschmiert, gereinigt und gewartet werden. Zur Reinigung, Schmierung und Wartung müssen jedoch die Reinraumbedingungen im Isolator verletzt werden, wodurch die Gefahr einer Verkeimung zunimmt. Darüber hinaus muss in regelmäßigen Abständen die Produktion unterbrochen werden, wodurch sich die Produktivität der gesamten Anlage reduziert.

Es liegt somit der vorliegenden Erfindung die Aufgabe zugrunde, eine Vorrichtung und ein Verfahren zum Transport von Behältern und/oder Vorformlingen entlang einer in einem Reinraum einer Behälterbehandlungs- und/oder -herstellungsvorrichtung angeordneten Prozessstrecke zur Verfügung zu stellen, welches die oben genannten Nachteile überwindet und insbesondere eine höhere Produktivität der Anlage ermöglicht. Ganz allgemein liegt der vorliegenden Erfindung die Aufgabe zugrunde, den zur Aufrechterhaltung der Reinraumbedingungen nötigen Bedarf an Materialien und Energie zu reduzieren und die Aufrechterhaltung der Reinraumbedingungen zu vereinfachen.

### Beschreibung der Erfindung

Die oben genannten Aufgaben werden gelöst durch eine Vorrichtung zur Behälterbehandlung und/oder Behälterherstellung mit einem Reinraum und einer Transporteinrichtung zum Transport von Behältern und/oder Vorformlingen entlang einer innerhalb des Reinraums angeordneten Prozessstrecke,
wobei der Reinraum ein den Reinraum von einem Außenraum trennendes Wandelement aufweist, und
wobei die Transporteinrichtung ein Antriebssystem aufweist, das außerhalb des Reinraums angeordnet und dazu ausgebildet ist, mittels magnetischer oder elektromagnetischer Wechselwirkung durch das Wandelement hindurch ein innerhalb des Reinraums bewegbar angeordnetes inneres Element zu bewegen.

Vorzugsweise kann das Wandelement aus einem nicht magnetisierbaren Material, wie z. B. Edelstählen oder Kunststoffen, ausgeführt sein.

Gemäß der vorliegenden Erfindung umfasst der Reinraum eine Prozessstrecke einer Behälterbehandlungs- und/oder Behälterherstellungsanlage in der Getränke verarbeitenden Industrie und/oder Pharmaindustrie, z. B. bei der Verarbeitung von Infusionen. Der Reinraum bzw. Isolator bezeichnet hierbei den Teil der Behälterbehandlungs- und/oder Behälterherstellungsvorrichtung, der die für die Abfüllung des jeweiligen Getränks erforderlichen aseptischen Bedingungen erfüllt. Im Folgenden werden die Begriffe Reinraum und Isolator synonym verwendet. Zum Aufrechterhalten der aseptischen Bedingungen ist der Reinraum gegenüber der Umgebung bautechnisch, d. h. durch geeignete Einhausung der Prozessstrecke, und/oder lufttechnisch, wie oben beschrieben, getrennt.

Die Prozesstrecke kann wie bereits angedeutet je nach den durchzuführenden Prozessschritten eine oder mehrere Prozesseinheiten umfassen. Insbesondere kann die Prozessstrecke eine oder mehrere Füllstationen mit einem oder mehreren Füllventilen zum Befüllen von Behältern mit dem jeweiligen Getränk, dem pharmazeutischen oder kosmetischen Produkt und optional eine oder mehrere Verschließstationen mit einem oder mehreren Verschließköpfen zum Verschließen der befüllten Behälter umfassen. Eine Schleuse im Anschluss an die Verschließstation kann zur Übergabe der befüllten und verschlossenen Behälter an eine Transporteinrichtung außerhalb des Reinraums verwendet werden.

In einer speziellen Weiterbildung kann die Vorrichtung zur Herstellung und zum Befüllen von Kunststoffbehältern, insbesondere von Kunststofflaschen, verwendet werden. In dieser Weiterbildung kann die Prozessstrecke weiterhin eine der Füllstation vorgeschaltete Umformungsvorrichtung, insbesondere eine Streckblasvorrichtung, zum Umformen von Kunststoffvorformlingen zu den jeweiligen Kunststoffbehältern, insbesondere Kunststoffflaschen, umfassen. Weiterhin kann der Umformungsvorrichtung eine Heizvorrichtung zum Aufbringen eines vorbestimmten Temperaturprofils auf die Vorformlinge vorgeschaltet werden. Im Allgemeinen umfasst die innerhalb des Reinraums angeordnete Prozessstrecke weiterhin eine Sterilisationseinheit zur Sterilisation der Vorformlinge oder der unbefüllten Behälter, die zu diesem Zwecke der entsprechenden Prozesseinheit vorgeschaltet wird. Solche Sterilisationseinheiten sind im Stand der Technik wohl bekannt und werden je nach zu sterilisierenden Vorformlingen bzw. Behältern und zu verfüllendem Getränk ausgebildet. Dabei ist eine Sterilisation der Vorformlinge bei Anordnung der Umformungsvorrichtung innerhalb des Reinraumes vorteilhaft, da Vorformlinge im Verhältnis zu fertigen Behältern unter Einsatz von weniger Desinfektionsmittel, Energie oder anderem Material sterilisiert werden können.

Behälter im Sinne der Erfindung sind insbesondere als Behälter ausgebildete Packmittel für Füllgut unterschiedlicher Art, insbesondere für Lebensmittel, wie Getränke, Medikamente, Hygieneartikel, Reinigungsmittel oder dergleichen, und dabei speziell Flaschen oder flaschenartige Behälter oder Dosen oder dosenartige Behälter. Die Behälter können aus Glas, Kunststoff, Karton, Verbundstoffen, Metall oder Keramik oder Kombinationen davon bestehen. Des Weiteren sind unter Behältern auch zusammengestellte Gebinde mit mehreren Behältern zu verstehen.

Erfindungsgemäß umfasst der Reinraum ein Wandelement als Teil der Einhausung der Prozessstrecke, wobei das im Folgenden weiter spezifizierte Wandelement baulich und/oder stofflich von den übrigen Wänden der Einhausung abgegrenzt sein kann. Das Wandelement trennt dabei den Reinraum von einem den Reinraum umgebenden Außenraum, also insbesondere von einem Produktionsraum, in dem die Behälterbehandlungs- und/oder Behälterherstellungsvorrichtung aufgestellt ist, und der nicht den zum Befüllen der Behälter erforderlichen Reinraumbedingungen unterliegt. Um einen Transport der Behälter und/oder Vorformlinge von einer Prozesseinheit zur nächsten entlang der innerhalb des Reinraums angeordneten Prozessstrecke zu ermöglichen, umfasst die erfindungsgemäße Vorrichtung eine Transporteinrichtung, welche einen innerhalb des Reinraums angeordneten Teil und einen außerhalb des Reinraums angeordneten Teil aufweist, wobei die beiden benannten Teile durch das Wandelement voneinander getrennt sind. Insbesondere findet kein Luftaustausch zwischen dem innerhalb des Reinraums angeordneten Teil und dem außerhalb des Reinraums angeordneten Teil durch das Wandelement statt. Somit kann der Reinraum zumindest im Bereich des Wandelements hermetisch, d. h. luftdicht, von der Umgebung abgeschlossen werden. Das hier bezeichnete Wandelement ist dabei nicht auf ein Seitenwandelement beschränkt, sondern umfasst explizit auch ein Deckenelement oder ein Bodenelement der Einhausung der Prozessstrecke. Im Falle von Deckenelementen oder Bodenelementen gestattet die weiter unten beschriebene Transporteinrichtung Zugang zu dem gesamten Querschnitt der Prozessstrecke, während im Falle von Seitenwandelementen Zugang in beliebiger Höhe über einer Aufstandsfläche der Vorrichtung gewährt werden kann. Es versteht sich, dass die Transporteinrichtung auch mehrere Teilsysteme umfassen kann, die jeweils durch ein Wandelement aus der oben beschriebenen Gruppe hindurch wechselwirken.

Die Transporteinrichtung weist erfindungsgemäß ein Antriebssystem auf, das vollständig außerhalb des Reinraums angeordnet ist. Dies schließt nicht aus, dass die mittels magnetischer oder elektromagnetischer Wechselwirkung durch das Wandelement in das Innere des Reinraums übertragene Kraftwirkung durch innerhalb des Reinraums angeordnete Wirkungselemente oder Aktuatoren zum Umsetzen der magnetischen oder elektromagnetischen Wechselwirkung in eine mechanische Bewegung des bewegbaren inneren Elements umgesetzt werden kann. Solche Aktuatoren können beispielsweise in Form von Stößeln, Hebeln, Zangen, Stangen oder ähnlichem ausgebildet sein, welche einen Wechselwirkungsteil aufweisen, der mit dem Antriebssystem magnetisch oder elektromagnetisch wechselwirken kann. Im Folgenden wird der Begriff magnetische Wechselwirkung oder magnetische Kopplung der Einfachheit halber sowohl für magnetische als auch für elektromagnetische Wechselwirkung bzw. Kopplung verwendet. Der Wechselwirkungsteil kann dabei zumindest teilweise aus einem magnetischen, insbesondere ferromagnetischen, Material gebildet sein, und/oder mindestens einen Permanent- und/oder Elektromagneten aufweisen.

Mittels der magnetischen Wechselwirkung mit dem Antriebssystem kann somit das innere Element gezielt bewegt werden, um beispielsweise eine Blasform zu öffnen und zu schließen oder einen Behälter anzuheben. Ebenso kann mittels der magnetischen Wechselwirkung eine Verschiebung des inneren Elements entlang einer vorgegeben Richtung, insbesondere das Bewegen eines unten weiter beschriebenen Transportelements, bewirkt werden. Das Antriebssystem kann hierzu über einen oder mehrere Elektromagnete verfügen, die mittels einer, ebenfalls außerhalb des Reinraums angeordneten, Steuer- und/oder Regeleinrichtung kontrolliert mit Strom beaufschlagt werden, um die magnetische Wechselwirkung zu erzielen.

Da bei der beschriebenen Vorrichtung kein mechanischer Kontakt zum Bewegen des inneren Elements erforderlich ist, kann der Reinraum zumindest im Bereich des Wandelements hermetisch gegen den Außenraum abgeschlossen sein. Zudem kann eine Schmierung, Reinigung oder Wartung des Antriebssystems ohne Eingriff in den Reinraum erfolgen, wodurch eine unbeabsichtigte Verkeimung des Reinraums vermieden werden kann.

Gemäß einer Weiterbildung kann die Transporteinrichtung weiterhin ein inneres Führungselement aufweisen, das innerhalb des Reinraums entlang des Wandelements angeordnet ist, wobei das innere Element mindestens ein inneres Transportelement umfasst, das an dem inneren Führungselement bewegbar angeordnet ist, und wobei das Antriebssystem dazu ausgebildet ist, das innere Transportelement mittels magnetischer Wechselwirkung durch das Wandelement hindurch entlang des inneren Führungselements zu bewegen.

Das innere Führungselement kann in Form einer Schiene, einer Lauffläche, einer Rille oder Kombination derselben ausgebildet werden. Gemäß dieser Weiterbildung umfasst das innere Element mindestens ein inneres Transportelement zum Transport eines oder mehrerer Behälter oder Vorformlingen, das an dem inneren Führungselement bewegbar angeordnet ist. Dabei ist das Antriebssystem dazu ausgebildet, das mindestens eine innere Transportelement mittels magnetischer oder elektromagnetischer Wechselwirkung durch das Wandelement hindurch entlang des inneren Führungselements zu bewegen. Zu diesem Zweck kann das innere Führungselement entlang des Wandelements angeordnet sein, wobei dazu weder das Wandelement eben noch das innere Führungselement gerade sein muss. Jedoch ist eine parallele Anordnung des Führungselements entlang des Wandelements von Vorteil, da hierdurch eine konstante magnetische Wechselwirkung zwischen Antriebssystem und innerem Transportelement erzielt werden kann.

Abstand, Anordnung und Ausbildung des inneren Führungselements und/oder der inneren Transportelemente hängen hierbei von der Dicke, Form und/oder dem Material des Wandelements, dem oder den weiter unten beschriebenen Magneten und/oder magnetischen Materialien der Transportelemente, der Größe dem Gewicht und/oder der Form der zu transportierenden Behälter und/oder Vorformlinge und weiteren prozesstechnisch bedingten Anforderungen, wie z. B. der Transportgeschwindigkeit, der Art des Transports, z. B. Neckhandling, oder ähnlichen, ab. Ausgehend von den jeweiligen Anforderungen liegt es im Bereich des allgemeinen Fachwissens des Fachmanns, das innere Führungselement und die inneren Transportelemente derart auszubilden, dass eine magnetische Wechselwirkung zwischen innerem Transportelement und äußerem Antriebssystem durch das Wandelement hindurch ausreichend ist, um einen Transport des jeweiligen Behälters und/oder Vorformlings zu ermöglichen. Spezielle vorteilhafte Ausführungsformen werden weiter unten beschrieben.

Insbesondere sei auf die Ausführung des Antriebssystems mit einem entlang des Wandelements parallel zum inneren Führungselement außerhalb des Reinraums angeordneten Linearmotorstrang in Form eines Langstators hingewiesen. Der Linearmotorstrang kann dabei einen einseitigen Linearmotorantrieb darstellen, wobei die magnetische Wechselwirkung, die im Allgemeinen über einen Luftspalt zwischen Transportelement und Linearmotorstrang übertragen wird, durch das Wandelement hindurch übertragen wird.

Das Antriebssystem kann weiterhin eine Steuer- und/oder Regeleinheit umfassen, die dazu ausgebildet ist, das innere Transportelement mit einer vorgegebenen Geschwindigkeit entlang des inneren Führungselements zu bewegen.

Gemäß einer weiteren Weiterbildung kann das Antriebssystem ein äußeres Führungselement, das außerhalb des Reinraums entlang des Wandelements angeordnet ist, und mindestens ein äußeres Transportelement umfassen, das an dem äußeren Führungselement bewegbar angeordnet ist, wobei das innere Transportelement und das äußere Transportelement derart ausgebildet sind, dass sie durch das Wandelement hindurch magnetisch aneinander gekoppelt werden können, und wobei das Antriebssystem dazu ausgebildet ist, das äußere Transportelement entlang des äußeren Führungselements zu bewegen.

Wie das innere Führungselement kann auch das äußere Führungselement in Form einer Schiene, einer Lauffläche, einer Rille oder Kombination derselben ausgebildet werden. Gemäß dieser Weiterbildung sind das innere Führungselement und das äußere Führungselement entlang des Wandelements angeordnet, wobei die beiden Führungselemente zumindest streckenweise parallel angeordnet sein können. Dabei ist der Abstand der beiden Führungselemente voneinander derart gewählt, dass sich auf beiden Seiten des Wandelements gegenüberliegende innere und äußere Transportelemente magnetisch aneinander gekoppelt werden können. Abstand, Anordnung und Ausbildung des äußeren Führungselements und/oder der äußeren Transportelemente unterliegen hierbei den gleichen Überlegungen wie schon das innere Führungselement und die inneren Transportelemente. Ausgehend von den jeweiligen Anforderungen liegt es im Bereich des allgemeinen Fachwissens des Fachmanns, das äußere Führungselement und die äußeren Transportelemente derart auszubilden, dass eine magnetische Wechselwirkung zwischen innerem Transportelement und äußerem Transportelement durch das Wandelement hindurch ausreichend ist, um einen Transport des jeweiligen Behälters und/oder Vorformlings zu ermöglichen.

Gemäß dieser Weiterbildung ist das Antriebssystem dazu ausgebildet, das äußere Transportelement entlang des äußeren Führungselements zu bewegen. Dabei kann das Antriebssystem, wie bereits erwähnt, eine Steuer- und/oder Regeleinheit umfassen, die dazu ausgebildet ist, das äußere Transportelement mit einer vorgegebenen Geschwindigkeit entlang des äußeren Führungselements zu bewegen. Aufgrund der magnetischen Kopplung zwischen äußerem und innerem Transportelement überträgt sich die Bewegung des äußeren Transportelements durch das Wandelement hindurch auf das innere Transportelement, welches somit über das außerhalb des Reinraums gelegene Antriebssystem indirekt angetrieben werden kann.

Durch Anordnung des kompletten Antriebssystems außerhalb des Reinraums lässt sich eine Reinigung und/oder Wartung des Antriebssystems ohne Eingriff in den Reinraum bewerkstelligen. Entsprechend lassen sich die benötigten Reinraumbedingungen innerhalb des Isolators leichter einstellen und aufrecht erhalten. Durch Trennung des Antriebssystems von dem Reinraum mittels des Wandelements kann die Gefahr einer Verkeimung durch das Antriebssystem ausgeschlossen werden. Insbesondere besteht keine mechanische Verbindung zwischen den entlang des inneren Führungselements bewegten inneren Transportelementen und den entlang des äußeren Führungselements bewegten äußeren Transportelementen, aufgrund welcher das Wandelement durchbrochen werden müsste.

Erfindungsgemäß kann die Transporteinrichtung eines oder mehrere innere Transportelemente und/oder eines oder mehrere äußere Transportelemente umfassen. Bevorzugt weist die Transporteinrichtung dabei ebenso viele äußere Transportelemente wie innere Transportelemente auf, da zum Antrieb der inneren Transportelemente bevorzugt Paare aus je einem inneren und je einem äußeren Transportelement gebildet werden. Die Anzahl der Transportelemente richtet sich dabei nach der Länge der Führungselemente und/oder der Anzahl der zu transportierenden Behälter und/oder Vorformlinge, d. h. dem Durchsatz der jeweiligen Prozesseinheiten der Prozessstrecke.

Gemäß einer Weiterbildung kann die Prozessstrecke eine Spritzvorrichtung zum Herstellen von Vorformlingen und eine Blasvorrichtung zum Umformen der Vorformlinge als Teil einer Einheit zur Herstellung von Kunststoffbehältern umfassen. Spritzvorrichtungen und Blasvorrichtungen sind im Stand der Technik wohl bekannt. Dabei kann eine Spritzvorrichtung ein Spritzgusswerkzeug mit einer oder mehreren Kavitäten zur Herstellung von Vorformlingen und/oder Verschlüssen umfassen. Eine Integration der Spritzvorrichtung in den Reinraum ist besonders vorteilhaft, da die Erhitzung des Kunststoffgranulats in einem Extruder der Spritzvorrichtung das Granulat gleichzeitig sterilisiert. Somit kann bei Anordnung der Spritzvorrichtung innerhalb des Reinraums auf eine separate Sterilisationseinheit für die Vorformlinge verzichtet werden. Jedoch ist bei Einbeziehung der Spritzvorrichtung in den Isolator eine lüftungstechnische Lösung im Bereich der Spritzvorrichtung nicht mehr machbar, da das Spritzgusswerkzeug zum Spritzen des Vorformlings geschlossen und geöffnet werden muss, wodurch ein Neckringisolator wie er im Stand der Technik verwendet wird nicht mehr anwendbar ist. Die vorliegende Erfindung löst dieses Problem durch den Einsatz des außerhalb des Reinraums angeordneten Antriebssystems, welches mittels magnetischer oder elektromagnetischer Wechselwirkung durch ein luftdichtes Wandelement hindurch den Transport der Vorformlinge bewerkstelligt. Bei der Blasvorrichtung zum Umformen der Vorformlinge kann es sich um eine Umformungsvorrichtung handeln, bei der an einem Transportrad eine Vielzahl von Blasstationen angeordnet ist. Insbesondere kann es sich bei den Blasstationen um Streckblasstationen handeln. In diesem Fall kann zwischen der Spritzvorrichtung und der Blasvorrichtung weiterhin eine Heizeinrichtung bzw. eine Kühlvorrichtung vorgesehen werden, um ein vorbestimmtes Temperaturprofil auf den Vorformling aufzubringen.

Gemäß einer Weiterbildung können das innere Transportelement und/oder das äußere Transportelement als Schlitten ausgebildet sein, die insbesondere mittels wenigstens eines Lagerelements aus der Gruppe, die von einer oder mehreren Rollen, einem Gleitlager, einem Kugellager, einer Kugelbuchse, einer Kugelumlaufbuchse, und einer Gleitbuchse gebildet wird, an dem jeweiligen Führungselement gelagert sind. Alternativ können das innere Transportelement und/oder das äußere Transportelement als Läufer, Puck, Shuttle oder dergleichen ausgebildet sein.

Während das äußere Transportelement neben den genannten mechanischen Lagerungen auch oder alternativ, wie unten beschrieben, vollständig oder teilweise magnetisch an dem äußeren Führungselement gelagert sein kann, ist das innere Transportelement gemäß einer einfachen Ausführung vollständig mechanisch mittels der oben genannten Lagerelemente an dem inneren Führungselement gelagert.

Gemäß einer weiteren Weiterbildung kann das innere Transportelement schmierungsfrei an dem inneren Führungselement gelagert sein. Zu diesem Zweck können das innere Führungselement und/oder das oder die Lagerelemente des inneren Transportelements aus einem reibungsarmen und/oder verschleißarmen Material hergestellt sein. Beispiele für reibungsarme bzw. verscheißarme Materialien in diesem Zusammenhang sind faserverstärkte Kunststoffe, wie z. B. glasfaserverstärktes PTFE. Um die Reibwerte noch weiter zu optimieren, können im Kunststoff noch Partikel aus Graphit (reinem Kohlenstoff) eingearbeitet sein.

Durch schmierungsfreie Lagerung des inneren Transportelements wird vermieden, dass der Reinraum zur Schmierung der Lagerung des inneren Transportelements in regelmäßigen Abständen geöffnet und die Reinraumbedingungen verletzt werden müssen. Auf diese Weise kann die Standzeit der Vorrichtung zur Behälterbehandlung und/oder Behälterherstellung verlängert werden. Im Gegensatz zum inneren Transportelement kann das außerhalb des Reinraums gelegene, und damit leicht zugängliche, äußere Transportelement geschmiert an dem äußeren Führungselement gelagert werden.

Gemäß einer Weiterbildung kann das innere Transportelement ein Greifsystem aufweisen, welches dazu ausgebildet ist, einen oder mehrere Behälter und/oder Vorformlinge aufzunehmen. Ebenso kann das innere Transportelement ein Greifsystem aufweisen, welches dazu ausgebildet ist, eine Blasform aufzunehmen. Insbesondere können mittels des Greifsystems gezielt Behälter und/oder Vorformlinge an einer Stelle entlang des inneren Führungselements aufgenommen und an einer anderen Stelle des inneren Führungselements wieder abgegeben werden. Somit ist mittels der beschriebenen Transporteinrichtung ein gesteuerter Transport von Behältern und/oder Vorformlingen innerhalb des Reinraums entlang der Prozessstrecke, d. h. zwischen den entlang der Prozessstrecke angeordneten Behälterbehandlungs- bzw. -herstellungseinheiten möglich.

Gemäß einer weiteren Weiterbildung kann die Vorrichtung weiterhin eine Steuerkurve und/oder einen Stößel zur Steuerung des Greifsystems umfassen, wobei die Steuerkurve und/oder der Stößel innerhalb des Reinraums angeordnet sind, und wobei der Stößel über eine Membran oder einen Balg von einem außerhalb des Reinraums angeordneten Antrieb getrennt angeordnet ist. Mittels der Steuerkurve und/oder des Stößels kann somit gezielt das Greifsystem geöffnet und geschlossen werden. Die Membran oder der Balg können als Teil des Wandelements oder von diesem getrennt angeordnet sein. Der außerhalb des Reinraums angeordnete Antrieb zum Bewegen des Stößels über die Membran oder den Balg kann als Teil des Antriebssystems oder separat von diesem ausgebildet sein. Dabei kann eine Steuer- und/oder Regeleinrichtung den Antrieb des Stößels steuern und/oder regeln.

Alternativ zu dem beschriebenen mechanischen Bedienen des Greifsystems über Steuerkurven oder Stößel kann auch, wie bereits oben angedeutet, ein magnetischer Eingriff durch das Wandelement hindurch erfolgen. Beispielsweise kann durch gesteuertes Aktivieren eines oder mehrerer außerhalb des Reinraums angeordneter Elektromagnete eine magnetische Anziehungs- oder Abstoßungswirkung auf einen mechanisch mit dem Greifsystem verbundenen Permanent- und/oder Elektromagneten des Greifsystems erzielt werden, wodurch das Greifsystem gezielt geöffnet und geschlossen werden kann.

Gemäß einer Weiterbildung kann das Antriebssystem einen Linearmotor oder einen Riemenantrieb aufweisen. Der Einsatz eines Linearmotors ist hierbei sowohl für Ausführungen möglich, bei denen ein äußeres Führungselement und entsprechend ein äußeres Transportelement vorgesehen sind, wobei das innere Transportelement indirekt über die magnetische Kopplung an das mittels des Linearmotors bewegte äußere Transportelement bewegt wird, als auch für Ausführungen, bei denen das innere Transportelement direkt durch den außerhalb des Reinraums angeordneten Linearmotorantrieb, insbesondere in Form eines entlang des Wandelements parallel zum inneren Führungselement angeordneten Langstators, angetrieben wird. Bei einem direkten Antrieb des inneren Transportelements mittels eines Linearmotorantriebs kann auf das äußere Transportelement und das äußere Führungselement verzichtet werden, wodurch sich der Aufbau weiter vereinfacht und Installations- und Wartungskosten reduziert werden können. Bei Verwendung eines Riemen- oder Bandantriebs ist jedoch stets ein äußeres Transportelement vorgesehen, welches mittels des Riemen- oder Bandantriebs angetrieben werden kann.

Riemen- bzw. Bandantriebe sind im Stand der Technik wohl bekannt. Beispielsweise kann ein Zahnriemen zum Antrieb des äußeren Transportelements eingesetzt werden. Dabei kann das mindestens eine äußere Transportelement fest mit dem Riemen bzw. Band verbunden sein oder durch Reibung mit diesem angetrieben werden. Ein Riemen- bzw. Bandantrieb kann dabei das äußere Transportelement mittels einer Steuer- und/oder Regeleinrichtung der Transporteinrichtung mit vorgegebenem Weg-Zeit-Profil entlang des äußeren Führungselements bewegen. Das Weg-Zeit-Profil wird hierbei, und ebenso bei Verwendung eines Linearmotorantriebs, in Abhängigkeit von Prozessparametern, wie beispielsweise einem gewünschtem Durchsatz bzw. einer Behandlungsdauer der jeweiligen Behandlungseinheiten, vorgegeben. Bei Verwendung eines Riemens- bzw. Bandantriebs kann die genaue Position des äußeren Transportelements über einen Drehwertgeber an einem Motor des Riemen- bzw. Bandantriebs bestimmt werden. Alternativ kann ein lineares Wegmesssystem verwendet werden, bei welchem insbesondere entlang des äußeren Führungselements angeordnete Sensoren die Position des äußeren Transportelements bestimmen.

Bei Verwendung eines Linearmotorantriebs können das innere Führungselement und/oder das äußere Führungselement als Teil je einer Transportbahn für das innere Transportelement bzw. das äußere Transportelement ausgebildet sein.

Dabei können das innere oder äußere Transportelement und das lineare Antriebssystem derart ausgebildet sein, dass das innere bzw. äußere Transportelement mittels einer magnetischen Kraft, in Wechselwirkung mit dem Linearmotor des Antriebssystems, bewegt werden kann. Das außerhalb des Reinraums angeordnete Antriebssystem ist hierzu mit einem magnetischen Linearantrieb, zum Beispiel in Form eines synchronen oder asynchronen Linearmotors, ausgestattet. Dazu wird entweder der entsprechende Abschnitt der äußeren Transportbahn, bei indirektem Antrieb des inneren Transportelements, mit einer Vielzahl von elektrischen Wicklungen in Form von einzeln ansteuerbaren Elektromagneten ausgerüstet oder eine solche Vielzahl von elektrischen Wicklungen in Form eines einseitigen Langstators entlang des Wandelements, und insbesondere parallel zum inneren Führungselement, angeordnet, um das innere Transportelement direkt anzutreiben.

Um eine magnetische Wechselwirkung zwischen dem jeweiligen Transportelement und den einzeln ansteuerbaren Elektromagneten zu erzeugen, kann das Transportelement mit einem oder mehreren Permanentmagneten bzw. nicht schaltenden Elektromagneten oder Eisenkernen ausgestattet werden. In einer Ausführung kann das Transportelement als ein passives Transportelement ausgeführt sein, welches durch Wechselwirkung mit den von den einzeln ansteuerbaren Elektromagneten der Transportbahn bzw. des Langstators erzeugten elektromagnetischen Wechselfeldern bewegt wird. Der mindestens eine Permanentmagnet bzw. nicht schaltende Elektromagnet bzw. Eisenkern des Transportelements bildet somit ein Reaktionselement des Transportelements, während die einzeln ansteuerbaren Elektromagnete der Transportbahn bzw. des Langstators Wechselwirkungselemente bilden. Bevorzugt ist bei Verwendung von passiven Transportelementen eine Lokalisierungseinheit an der äußeren und/oder inneren Transportbahn angebracht, um die Lage wenigstens eines äußeren bzw. inneren Transportelements und bevorzugt aller Transportelemente zu ermitteln und an eine Steuerung der Elektromagnete der Transportbahn bzw. des Langstators weiterzugeben. Die Lokalisierungseinheit kann insbesondere durch entlang der Transportbahn angeordnete Sensoren realisiert werden. Die Stromstärke durch die elektrischen Wicklungen der Transportbahn bzw. des Langstators kann von der Steuerung in Abhängigkeit von einem Kraftbedarf des zu bewegenden Transportelements automatisch angepasst werden. Durch individuelles Regeln der Stromstärke durch einzelne Wicklungen kann das Transportelement außerdem beschleunigt, abgebremst oder mit einer konstanten vorgegebenen Geschwindigkeit bewegt werden.

Bei einer alternativen Ausführungsform ist das Transportelement als aktives Transportelement mit elektrischen Wicklungen versehen, welche die für den Antrieb notwendigen magnetischen Wechselfelder aufbringen können. Entsprechend wird der Abschnitt der Transportbahn bzw. des Langstators mit Permanentmagneten bzw. nicht schaltenden Elektromagneten versehen. Hierbei können sowohl die für den Antrieb nötige elektrische Energie als auch für die Steuerung nötige Signale via Induktionsübertragung auf die einzelnen Transportelemente übertragen werden. Die Steuerung kann sich demnach dezentral auf den einzelnen Transportelementen befinden oder auch zentral in einer eigenen Steuereinheit untergebracht sein. Alternativ dazu kann die nötige elektrische Energie über eine entlang der inneren oder äußeren Transportbahn angeordnete Leitung auf die Transportelemente übertragen werden. Des Weiteren ist eine Kombination einer Ausführung des Transportelements als aktives Transportelement mit einer Transportbahn mit einzeln ansteuerbaren Elektromagneten denkbar. Um Wartungen des Linearmotorantriebs zu vereinfachen, ist jedoch eine Ausführung des inneren Transportelements als passives Transportelement im Fall des direkten Antriebs vorteilhaft, wobei insbesondere die Verwendung von Permanentmagneten für das Reaktionselement des inneren Transportelements einen bzgl. des Reinraums wartungsfreien Antrieb ermöglicht.

Zum Einsatz eines Linearmotorantriebs als indirekten Antrieb des inneren Transportelements kann die äußere Transportbahn einen oder mehrere Linearmotorstränge aufweisen, die als Langstatoren von, insbesondere synchronen, Linearmotoren ausgebildet sein können. In einer alternativen Ausführung können die Linearmotorstränge auch als asynchrone Linearmotoren ausgebildet sein, wobei der mindestens eine Permanentmagnet und/oder nicht schaltende Elektromagnet des Reaktionselements des Transportelements und/oder ein elektrisch leitendes Element des Transportelements, z. B. in Form einer metallischen Platte, an welcher der Permanentmagnet und/oder nicht schaltende Elektromagnet angebracht sind, als elektrische Leiter für die Induktion durch die asynchronen Linearmotoren fungieren.

Neben dem oben beschriebenen, als Magnettrasse ausgebildeten Teil der äußeren Transportbahn kann die Transportbahn weiterhin wenigstens eine Teilstrecke umfassen, entlang derer das äußere Transportelement mit einer konstanten Geschwindigkeit bewegt werden kann. Die Teilstrecke kann hierzu eine Antriebsvorrichtung in Form eines Transportbandes, eines Transportriemens, einer Transportkette oder ähnlichen umfassen. Durch Kombination von Teilstrecken mit Magnetantrieb und Teilstrecken mit einem mechanischen Antrieb können Installationskosten der gesamten Transporteinrichtung gesenkt werden.

In einer Weiterbildung kann das äußere Transportelement, wie oben erwähnt, vollmagnetisch oder teilweise magnetisch und teilweise mechanisch oder vollmechanisch an der das äußere Führungselement umfassenden äußeren Transportbahn gelagert sein. Bei vollmagnetischer Lagerung ist der oben beschriebene Teil der Transportbahn als Magnetschwebebahn ausgebildet, wobei elektrische Wicklungen in der Transportbahn und/oder dem Transportelement vorgesehen sind, welche eine magnetische Levitation des Transportelements über der Transportbahn bewirken. Dadurch lässt sich die Reibung zwischen dem Transportelement und der Transportbahn auf ein Minimum reduzieren. Bei teilweise magnetischer und teilweise mechanischer Lagerung kann das Transportelement zusätzlich ein oder mehrere der oben genannten Lagerelemente, zum Beispiel in Form von Stützrollen, Führungsrollen und/oder Gleitlager aufweisen. Die zusätzlichen Stützelemente rollen oder gleiten dabei auf einer Lauffläche der Transportbahn und/oder entlang einer Führungsschiene des Führungselements. Bei vollmechanischer Lagerung kann das Transportelement ausschließlich durch das beschriebene mindestens eine Lagerelement gelagert sein. Ergänzend oder alternativ hierzu kann eine Lagerung auch pneumatisch erfolgen, wobei die Transportbahn in dem entsprechenden Teilstück als Luftschwebebahn ausgeführt ist. Bei pneumatischer Lagerung ergibt sich wie auch bei vollständig magnetischer Lagerung eine Minimierung der Reibung zwischen dem Transportelement und der Transportbahn.

Die Transporteinrichtung kann weiterhin eine Steuer- und / oder Regeleinrichtung, insbesondere einen Prozessrechner, zum Steuern des mindestens einen inneren und/oder äußeren Transportelements umfassen. Die Steuer- und / oder Regeleinrichtung kann dabei durch eine zentrale Steuereinheit und/oder durch dezentral an den Transportelementen angeordnete Steuereinheiten realisiert werden. Die eine oder mehrere Steuereinheiten können dabei derart ausgebildet sein, dass sie die elektrischen Wicklungen der Transportbahn bzw. des Langstators und/oder der Transportelemente derart individuell steuern und/oder regeln, dass die von den inneren Transportelementen mitgeführten Behälter oder Vorformlinge mit einem durch die Prozessparameter der Prozessstrecke vorgegebenen Weg-Zeit-Profil entlang der inneren Transportbahn bewegt werden.

Die Beschleunigungen des äußeren Transportelements können dabei von der Steuer- und/oder Regeleinrichtung derart angepasst werden, dass die magnetische Kopplung zwischen innerem und äußerem Transportelement selbst bei beladenem innerem Transportelement nicht abreißt. Somit kann das innere Transportelement durch Vorgabe eines Weg-Zeit-Profils für das äußere Transportelement mit demselben Weg-Zeit-Profil bewegt werden. Sensoren entlang der äußeren Transportbahn erlauben dabei eine Positionsbestimmung des äußeren, und indirekt damit auch des inneren, Transportelements.

Ein direkter oder indirekter Antrieb mittels eines Linearmotors ist dabei besonders verschleißarm und erlaubt eine hohe Standzeit der Anlage.

Gemäß einer weiteren Weiterbildung können das innere und/oder das äußere Führungselement mindestens zwei Segmente umfassen, wobei das Antriebssystem für jedes Segment des äußeren Führungselements einen Linearmotor oder einen Riemenantrieb aufweist. Eine Segmentierung der Transportstrecke durch Segmentierung des inneren und/oder des äußeren Führungselements ist insbesondere bei Anordnung sowohl der Behälterherstellung als auch der Behälterbehandlung innerhalb des Reinraums, d. h. im Falle unterschiedlicher Anforderungen an das innere Transportelement, insbesondere dessen Greifsystem, in Abhängigkeit von den zu durchlaufenden Prozessen entlang der Prozessstrecke, von Vorteil, da die Antriebssysteme für das jeweilige Segment den zu transportierenden Behältern bzw. Vorformlingen angepasst werden können. So kann beispielsweise ein Direktantrieb mittels außerhalb des Reinraums angeordneten Langstators für gefüllte, d. h schwere, Behälter vorteilhaft sein, während ein indirekter Antrieb der unbefüllten Behälter bzw. Vorformlinge ausreichend sein kann. Ebenso kann die Behälterbehandlung kontinuierlich oder taktweise erfolgen, wobei verschiedene Segmente mit unterschiedlichen äußeren Antriebssystemen der jeweiligen Behandlungsweise angepasst werden können.

Hierbei kann das innere Führungselement durchgehend ausgebildet sein, sodass das innere Transportelement über die mehrere Segmente des äußeren Führungselements abdeckende Transportstrecke hinweg bewegt werden kann. Alternativ kann auch das innere Führungselement mehrere Segmente aufweisen, welches beispielsweise bei Unterbrechung des inneren Führungselements durch eine Rundläufermaschine der Fall ist, an die von den entlang des linearen Führungselements bewegten inneren Transportelementen mitgeführte Behälter oder Vorformlinge mittels eines Transfersterns übergeben werden können. Des Weiteren kann ein Segment des inneren und/oder äußeren Führungselements zum Transport von Verschlüssen zu einer Verschließstation vorgesehen werden. Ebenso können mehrere Segmente parallel zueinander geschaltet sein, sodass durch mehrere parallele lineare Schlittensysteme eine Erhöhung der Ausstoßleistung erzielt werden kann.

Die inneren und/oder äußeren Transportelemente können mittels des Antriebssystems und einer zugehörigen Steuer- und/oder Regeleinheit entlang der inneren bzw. äußeren Führungselemente hin- und herbewegt werden, wobei eine Blockverarbeitung mehrerer Behälter oder Vorformlinge durch getaktetes Bewegen mehrerer Transportelemente denkbar ist.

Alternativ können das innere Führungselement und/oder das äußere Führungselement mindestens eine Rückführstrecke zum Rückführen des jeweiligen Transportelements umfassen, die insbesondere ebenfalls entlang des Wandelements angeordnet ist. Eine solche Rückführstrecke lässt sich insbesondere bei Ausbildung des Wandelements als Decken- bzw. Bodenelement der Einhausung als Teil einer geschlossenen Transportbahn ausbilden. Auch bei Ausbildung des Wandelements als Teil der Seitenwand der Einhausung kann eine Rückführstrecke entlang des Wandelements angeordnet sein, wobei die jeweiligen Transportelemente entlang der Rückführstrecke beispielsweise gegenüber der Prozessstrecke auf den Kopf gestellt transportiert werden.

Bei Vorsehen einer Rückführstrecke für die jeweiligen Transportelemente sind somit die jeweiligen Führungselemente und Komponenten des Antriebssystems, insbesondere die Langstatoren oder Riemenantriebe, für jedes Segment mit Rückführstrecke geschlossen ausgebildet. Form, Länge und Anordnung der jeweiligen Elemente können hierbei den Anforderungen der Prozessstrecke und der Anordnung der Behälterbehandlungs- bzw. Behälterherstellungseinheiten angepasst werden.

Wie bereits oben beschrieben, können das innere Transportelement und/oder das äußere Transportelement mindestens einen Permanentmagneten und/oder mindestens einen Elektromagneten, insbesondere in Form eines Halbach-Arrays aufweisen, der derart an dem jeweiligen Transportelement angeordnet ist, dass zwei sich auf beiden Seiten des Wandelements gegenüberliegende Transportelemente magnetisch aneinander gekoppelt werden können. Der oder die Permanentmagneten und/oder Elektromagneten können dabei speziell für die magnetische Kopplung des inneren and des äußeren Transportelements, und somit unabhängig von und insbesondere zusätzlich zu eventuellen für die Wechselwirkung mit einem Linearmotorantrieb vorgesehenen Permanent- und/oder Elektromagneten vorgesehen werden. In einer besonders einfachen Ausführung kann entweder das innere oder das äußere Transportelement einen Permanentmagneten und/oder einen Elektromagneten für die magnetische Kopplung aufweisen, während das jeweils andere Transportelement lediglich ein aus einem magnetischen, insbesondere ferromagnetischen, Material bestehendes Wechselwirkungselement aufweist, das von dem Permanentmagneten und/oder dem Elektromagneten angezogen werden kann. In allen Fällen sind die die magnetische Kopplung bewirkenden Elemente an den jeweiligen Transportelementen derart angeordnet, dass eine für die jeweiligen Anforderungen bezüglich des Transports von Behältern und/oder Vorformlingen ausreichende magnetische Kopplungskraft zwischen zwei sich auf beiden Seiten des Wandelements gegenüberliegende Transportelemente nicht unterschritten wird. Für den Fachmann ergeben sich aus der Masse der zu transportierenden Behälter und/oder Vorformlinge, der gewünschten Geschwindigkeit bzw. Beschleunigung, der relativen Anordnung der Führungselemente, insbesondere deren Abstand, der Dicke und dem Material des Wandelements, und anderen, die magnetische Wechselwirkung beeinflussenden Faktoren die Bedingungen an die Anordnung und/oder Stärke der magnetischen Kopplungselemente, insbesondere der Permanent- und/oder Elektromagnete. Eine besonders starke magnetische Kopplung lässt sich mit Hilfe einer sog. Halbach-Anordnung, bei der eine Vielzahl in einer Reihe angeordneter magnetischer Dipole jeweils um 90° gegenüber ihren Nachbarn in bzw. gegen die Bewegungsrichtung gedreht sind, erzielen, da in dieser Anordnung der magnetische Fluss auf einer Seite der Kette von Dipolen konzentriert ist. Allgemein gilt die Regel, dass sich im Zustand magnetischer Kopplung jeweils komplementäre magnetische Pole auf beiden Seiten des Wandelements gegenüberstehen sollten. Bei Verwendung eines Halbach-Arrays aus Permanentmagneten als magnetisches Kopplungselement des inneren Transportelements und eines komplementären Halbach-Arrays aus Permanentmagneten als magnetisches Kopplungselement des äußeren Transportelements ergibt sich eine besonders starke magnetische Kopplung.

Gemäß einer Weiterbildung kann das Wandelement im Wesentlichen eben ausgebildet sein. Hierbei bedeutet im Wesentlichen eben, dass das Wandelement innerhalb der Fertigungstoleranzen keine Krümmungen aufweist. Ein ebenes Wandelement erlaubt eine Parallelführung des inneren und des äußeren Führungselements, wobei die magnetischen Kopplungselemente des äußeren und des inneren Transportelements mit besonders geringem Abstand zum Wandelement und daher besonders hoher Kopplungsstärke ausgeführt werden können.

Gemäß einer weiteren Weiterbildung kann das Wandelement aus einem oder mehreren elektrisch nicht leitenden Materialien gebildet sein. Gemäß dem Prinzip der Lenzschen Regel wirkt ein durch eine magnetische Flussänderung in einem elektrisch leitenden Material induzierter elektrischer Strom der magnetischen Flussänderung, und damit der Ursache der elektromagnetischen Induktion, entgegen. Um die Induktion eines solchen Stroms in dem Wandelement zu vermeiden, was zu einem erhöhten Energiebedarf für den Antrieb des inneren und/oder äußeren Transportelements und einer Abschirmung der durch die Wand greifenden magnetischen Flusslinien führen würden, ist in dieser Weiterbildung das Wandelement aus einem oder mehreren elektrisch nicht leitenden Materialien, insbesondere Kunststoffen, gebildet. Somit können die beiden Transportelemente bzw. das innere Transportelement und der Langstator des außen gelegenen Linearmotorantriebs ungehindert magnetisch aneinanderkoppeln.

Die oben genannten Aufgaben werden auch durch ein Verfahren zum Transport von Behältern und/oder Vorformlingen entlang einer in einem Reinraum einer Behälterbehandlungs- und/oder Behälterherstellungsvorrichtung angeordneten Prozessstrecke gelöst, das die folgenden Schritte umfasst:
Koppeln eines außerhalb des Reinraums an einem äußeren Führungselement bewegbar angeordneten Transportelements an ein innerhalb des Reinraums an einem inneren Führungselement bewegbar angeordnetes Transportelement mittels magnetischer Wechselwirkung durch ein zwischen dem äußeren und dem inneren Führungselement liegendes Wandelement des Reinraums,
Bewegen des äußeren Transportelements mittels eines außerhalb des Reinraums angeordneten Antriebssystems entlang des äußeren Führungselements, und
Mitführen des inneren Transportelements entlang des inneren Führungselements mittels der magnetischen Kopplung an das bewegte äußere Transportelement.

Dabei können dieselben Variationen und Weiterbildungen, insbesondere im Hinblick auf das innere und das äußere Führungselement, das innere und das äußere Transportelement, die Prozessstrecke, den Reinraum und das außerhalb des Reinraums angeordnete Antriebssystem, die oben in Zusammenhang mit der erfindungsgemäßen Vorrichtung beschrieben wurden, auch auf das Transportverfahren angewendet werden. Insbesondere ist ein Bewegen des äußeren Transportelements durch elektromagnetische Wechselwirkung mit einem entlang des äußeren Führungselements angeordneten Linearmotorantrieb denkbar. Das Koppeln des äußeren an das innere Führungselement kann dabei automatisch, z. B. durch Annäherung der beiden Elemente bei Verwendung von Permanentmagneten, geschehen oder aktiv durch gesteuertes Beaufschlagen eines elektromagnetischen Kopplungselements mit Strom. Wie oben bereits beschrieben kann das Bewegen des äußeren Transportelements mittels einer Steuer- und/oder Regeleinrichtung der Transporteinrichtung derart gesteuert werden, dass das an das äußere Transportelement gekoppelte innere Transportelement mit einem vorgegeben Weg-Zeit-Profil entlang des inneren Führungselements bewegt wird.

Gemäß einer weiteren Weiterbildung können das innere und/oder das äußere Transportelement mindestens einen Elektromagneten zur Herstellung der magnetischen Kopplung aufweisen, wobei das Verfahren weiterhin die Schritte umfasst:
Lösen der magnetischen Kopplung durch Unterbrechen einer Stromversorgung des mindestens einen Elektromagneten, und
Rückführen des inneren und/oder äußeren Transportelements entlang einer inneren und/oder äußeren Rückführstrecke.

Falls zum Herstellen der magnetischen Kopplung ein Elektromagnet an dem inneren und/oder äußeren Transportelement vorgesehen ist, so kann dieser mittels der Steuer- und/oder Regeleinrichtung durch Unterbrechen einer Stromversorgung des Elektromagneten abgeschaltet werden, wodurch die magnetische Kopplung der beiden Transportelemente gelöst werden kann. Dies kann beispielsweise am Ende einer Transportstrecke bzw. eines Segments einer Transportstrecke geschehen, wobei das Rückführen des inneren und/oder äußeren Transportelements unabhängig voneinander, beispielsweise durch einen Riemen- bzw. Bandantrieb oder bei gegen eine Aufstandsfläche der Anlage geneigter Rückführstrecke durch die Schwerkraft erfolgen kann.

Bei Verwendung der zuvor beschriebenen Vorrichtungen oder Verfahren kann die zur Aufrechterhaltung der Reinraumbedingungen benötigte Lüftungstechnik einer Aseptikanlage in Isolatorbauweise wesentlich reduziert werden. Die Gefahr einer Verkeimung besteht zudem nicht mehr, da der Isolator durch das Wandelement von der Umgebung getrennt ist. Wie erwähnt, können elektrische lineare Antriebssysteme in Form von Linearmotoren sehr reibungsarm ausgeführt werden, wodurch der Verbrauch an elektrischer Energie deutlich reduziert werden kann. Da das Antriebssystem außerhalb des Isolators liegt, ist es zudem besonders wartungsarm und wartungsfreundlich, insbesondere nicht chemiebelastet. Mit dem beschriebenen Antriebssystem kann weiterhin die Herstellung des Vorformlings bzw. des Verschlusses in den Isolator integriert werden, wodurch eine Sterilisationseinheit obsolet wird.

Weitere Merkmale und beispielhafte Ausführungsformen sowie Vorteile der vorliegenden Erfindung werden nachfolgend anhand der Zeichnungen näher erläutert. Es versteht sich, dass die Ausführungsformen nicht den Bereich der vorliegenden Erfindung erschöpfen. Es versteht sich weiterhin, dass einige oder sämtliche der im weiteren beschriebenen Merkmale auch auf andere Weise miteinander kombiniert werden können.
Figur 1 stellt eine Prinzipskizze für ein grundlegendes Beispiel einer Vorrichtung zur Behälterbehandlung mit einer Transporteinrichtung gemäß der vorliegenden Erfindung dar.
Figur 2 stellt eine beispielhafte Ausführung eines Paares magnetisch gekoppelter Transportelemente in einer perspektivischen Darstellung dar.
Figur 3 stellt eine beispielhafte Ausführung eines Antriebssystems zum indirekten Antrieb eines inneren Transportelements in Draufsicht dar.
Figur 4 stellt eine beispielhafte Ausführung eines Antriebssystems zum direkten Antrieb des inneren Transportelements in Draufsicht dar.
Figur 5 stellt eine beispielhafte Ausführung des Transportelements und der Wechselwirkungselemente der Transportbahn dar.
Figuren 6 A bis C stellen alternative Ausführungsformen der magnetischen Kopplungselemente des inneren und äußeren Transportelements dar.
Figur 7 stellt eine alternative Weiterbildung der in Figur 1 gezeigten Transporteinrichtung mit zwei äußeren Segmenten dar.

In den im Folgenden beschriebenen Figuren bezeichnen gleiche Bezugszeichen gleiche Elemente. Zur besseren Übersichtlichkeit werden gleiche Elemente nur bei ihrem ersten Auftreten beschrieben. Es versteht sich jedoch, dass die mit Bezug auf eine der Figuren beschriebenen Varianten und Ausführungsformen eines Elements auch auf die entsprechenden Elemente in den übrigen Figuren angewendet werden können.

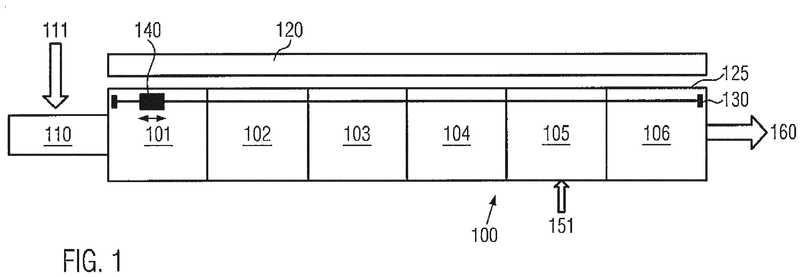

Figur 1 stellt eine Prinzipskizze für ein grundlegendes Beispiel einer Vorrichtung zur Behälterbehandlung und/oder Behälterherstellung mit einem Reinraum und einer Transporteinrichtung gemäß der vorliegenden Erfindung dar. In der hier dargestellten, nicht limitierenden Ausführung umfasst der Reinraum 100 eine Prozessstrecke, entlang derer die Stationen 101 bis 106 zur Behälterherstellung bzw. -behandlung angeordnet sind. Die gemeinsame Umrandung dieser Stationen stellt hierbei schematisch die Einhausung des Isolators 100 dar, von welcher ein Wandelement 125 gesondert bezeichnet ist.

Ein Extruder 110 wird außerhalb des Reinraums über eine Granulatzuführung 111 mit Granulat bestückt, welches im Extruder erhitzt wird, sodass es zähflüssig wird. Durch das Erhitzen wird das Granulat gleichzeitig sterilisiert. In dieser Weiterbildung findet die Herstellung von Vorformlingen durch eine Spritzvorrichtung 101 bereits innerhalb des Isolators 100 statt. Anschließend bringt eine Heizvorrichtung 102 ein vorgegebenes Temperaturprofil auf die gebildeten Vorformlinge auf, welche durch eine Streckblasvorrichtung 103 mit einer oder mehreren Kavitäten zu Kunststoffflaschen umgeformt werden.

Nach Fertigstellung der Kunststoffflasche kann die Flasche in einer Befüllstation 104 mit einem flüssigen Lebensmittel befüllt und anschließend in einer Verschließstation 105 mit einem über eine Verschlusszuführung 151 zugeführten Verschluss verschlossen werden. In einer Schleuse 106 wird der befüllte und nunmehr versiegelte Behälter auf ein Transportband abgesetzt, welches ihn zu einer Behälterabführung 160 aus dem Reinraum 100 heraus transportiert. Außer dieser Schleuse, die lüftungstechnisch von dem Außenraum getrennt ist, kann gemäß der vorliegenden Weiterbildung die gesamte Einhausung des Reinraums 100 luftdicht ausgeführt sein.

Der Transport der Vorformlinge und Behälter innerhalb des Reinraums 100 wird erfindungsgemäß mit einem oder mehreren an einer Führungsschiene 130 bewegbar gelagerten Transportelementen 140 bewerkstelligt. Die Führungsschiene 130 ist im vorliegenden Fall geradlinig dargestellt, kann aber auch Kurvenelemente umfassen, wobei die Führungsschiene 130 vorzugsweise parallel zu dem Wandelement 125 angeordnet ist.

Durch Anordnen des hier schematisch dargestellten Antriebssystems 120 außerhalb des Reinraums 100, wobei das Antriebssystem 120 das innere Transportelement 140 mittels magnetischer oder elektromagnetischer Wechselwirkung durch das Wandelement 125 hindurch entlang der Führungsschiene 130 bewegt, kann eine Wartung des Antriebssystems vorgenommen werden, ohne den Reinraum 100 zu öffnen. Dadurch wird eine Verkeimung des Reinraums durch Wartungsarbeiten vermieden.

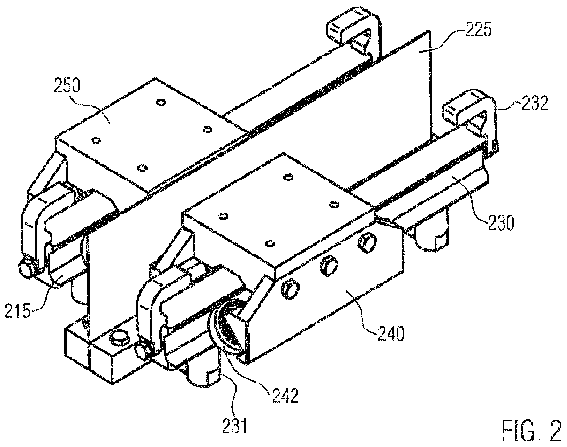

Figur 2 zeigt exemplarisch ein Paar von magnetisch gekoppelten Transportelementen in einer perspektivischen Darstellung. Das innerhalb des Reinraums gelegene innere Transportelement 240 ist dabei von dem außerhalb des Reinraums gelegenen äußeren Transportelement 250 durch das Wandelement 225 getrennt. Das äußere Transportelement 250 ist an einer äußeren Führungsschiene 215 mittels Rollen bewegbar gelagert. Das innere Transportelement 240 ist gleichfalls an einer inneren Führungsschiene 230 mittels Rollen 242 bewegbar gelagert. Dabei weist die innere Führungsschiene 230 einen Endanschlag 232 und eine Halterung 231 auf. Bei Vorsehen einer Rückführstrecke mittels einer geschlossenen Führungsschiene wird hingegen kein Endanschlag vorgesehen.

Das Wandelement 225 ist vorzugsweise hinreichend dünn ausgeführt, um eine magnetisch Kopplung zwischen dem inneren Transportelement 240 und dem äußeren Transportelement 250 durch das Wandelement 225 hindurch zu ermöglichen. Dabei kann das Wandelement 225 vorzugsweise aus einem dünnen Kunststoff oder einer Kunststofffolie ausgebildet sein. Die Figur zeigt die beiden Transportelement 240 und 250 in gekoppelter Stellung, wobei aufgrund der magnetischen Kopplung ein gesteuertes Bewegen des äußeren Transportelements 250 entlang der äußeren Führungsschiene 215 zu einem synchronen Bewegen des inneren Führungselements 240 entlang der inneren Führungsschiene 230 führt.

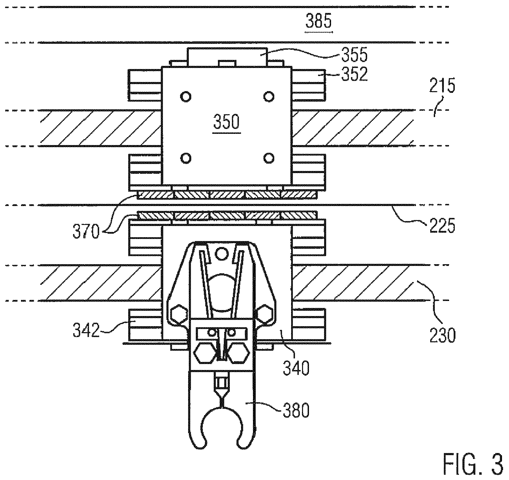

Figur 3 stellt eine Draufsicht einer speziellen Ausführungsform des Antriebssystems gemäß der vorliegenden Erfindung dar, wobei das innere Transportelement 340 indirekt durch Bewegen des äußeren Transportelements 350 angetrieben wird. Dabei ist das innere Transportelement 340 an das äußere Transportelement 350 über Permanentmagnete oder Elektromagnete 370 durch das Wandelement 225 gekoppelt. Die Magnete 370 sind dabei derart angeordnet, dass sich stets komplementäre Pole auf beiden Seiten des Wandelements 225 gegenüberstehen (siehe Schraffierungen).

Neben der äußeren Führungsschiene 215 und der inneren Führungsschiene 230 sowie den Rollen 342 und 352, mittels derer das innere bzw. äußere Transportelement an der jeweiligen Führungsschiene gelagert ist, zeigt die Figur weiterhin eine Greifvorrichtung 380 des inneren Transportelements 340, mit der die Vorformlinge bzw. Behälter aufgenommen und transportiert werden können. Dabei kann die Greifvorrichtung 380 mittels eines mechanischen Antriebssystems, beispielsweise in Form von Stößeln oder Steuerkurven (nicht dargestellt), durch eine Membran oder einen Balg (nicht dargestellt) von außen bedient werden.

Das direkt angetriebene äußere Transportelement 350 verfügt weiterhin über ein Reaktionselement 355, welches über magnetische Wechselfelder eines im Außenraum angeordneten Linearmotorstrangs 385 gesteuert und/oder geregelt angetrieben werden kann. Alternativ verfügt das äußere Transportelement 350 über eine Kontaktfläche 355, welche mit einem im Außenraum angeordneten Riemen bzw. Bandantrieb 385 in Eingriff steht. Ein Drehwertgeber (nicht dargestellt) an einen den Transportriemen antreibenden Motor (nicht dargestellt) kann verwendet werden, um eine Position des äußeren Transportelements 350 entlang der äußeren Führungsschiene 215 zu bestimmen. Damit lässt sich auch auf einfache Weise die Position des inneren Transportelements 340 entlang der inneren Führungsschiene 230 bestimmen. Somit kann mittels eines vollständig außerhalb des Reinraums gelegenen Antriebssystems eine gezielte Steuerung des inneren Transportelements 340 zu den jeweiligen Behandlungsstationen vorgenommen werden. Die Lagerung des inneren Transportelements 340 mittels der Rollen 342 kann dabei schmierungsfrei realisiert werden, wodurch sich die Standzeiten der Gesamtanlage verlängern.

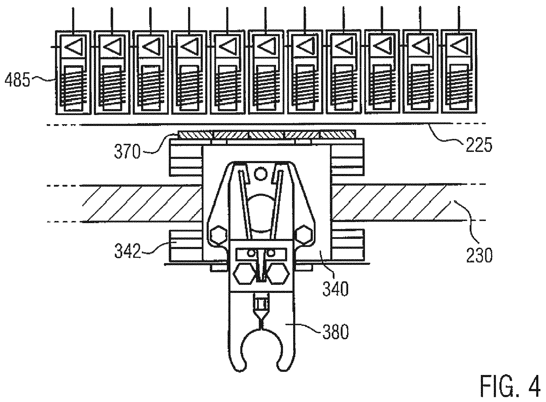

In Figur 4 ist eine Draufsicht einer alternativen Ausführungsform der Transporteinrichtung gemäß der vorliegenden Erfindung dargestellt, wobei ein außerhalb des Reinraums liegender Langstator 485 eines Linearmotorantriebs das innere Transportelement 340 direkt durch das Wandelement 225 antreibt. Dazu wechselwirken die elektrischen Wicklungen des Langstators 485 mit Permanent- und/oder Elektromagneten 370 des inneren Transportelements 340. Durch gesteuertes oder geregeltes Beaufschlagen der elektrischen Wicklungen mit Strom mittels einer Steuer- und/oder Regeleinrichtung (nicht dargestellt) des Antriebssystems kann das innere Transportelement 340 gezielt entlang der inneren Führungsschiene 230 bewegt werden. Des Weiteren zeigt die Figur die bereits beschriebenen Rollen 342 und die bereits beschriebene Greifvorrichtung 380 des inneren Transportelements.

Ein direkter Antrieb mittels eines entlang des Wandelements 225 angeordneten Langstators 485 eines Linearmotorantriebs minimiert die Anzahl beweglicher Teile gegenüber der in Figur 3 dargestellten indirekten Antriebsvariante, wodurch Wartungszeiten reduziert und Installations- und Betriebskosten minimiert werden können. Die Trennung des Reaktionselements 370 des inneren Transportelements 340 von den Wechselwirkungselementen 485 des Linearmotorantriebs durch das Wandelement 225 entspricht dabei dem sonst üblichem Luftspalt zwischen Langstator und Reaktionselement des Läufers von Magnettrassen. Um eine Abschirmung durch indizierte Ströme zu vermeiden, ist das Wandelement 225 bevorzugt aus elektrisch nicht leitenden Materialien gebildet.

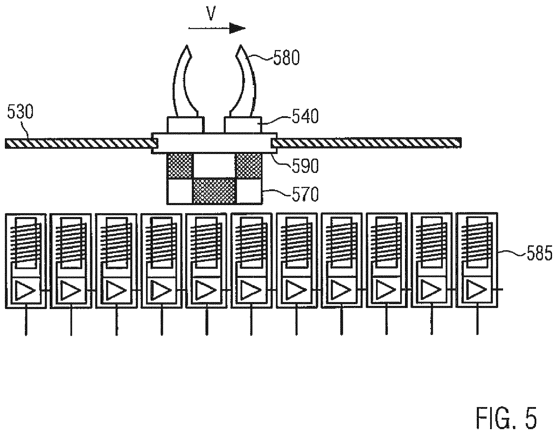

Figur 5 zeigt eine schematische Darstellung der klassischen Wechselwirkung zwischen einem Linearmotorantrieb 585 und einem Reaktionselement 570 eines entlang einer Führungsschiene 530 bewegbar angeordneten Transportelements 540, wie sie auch auf die in Figur 4 dargestellte Ausführungsform Anwendung findet.

Der Antrieb des hier dargestellten passiven Transportelements 540 geschieht durch magnetische Wechselwirkung zwischen dem Reaktionselement 570 des Transportelements und einer Vielzahl elektrischer Wicklungen 585 entlang der Transportbahn, deren Teil die Führungsschiene 530 ist. Dabei können die elektrischen Wicklungen 585 individuell angesteuert und als Elektromagnete einzeln umgepolt werden. Durch Wechselwirkung der Magnetfelder der Elektromagnete mit dem hier dargestellten Permanentmagneten des Transportelements erfährt das Transportelement eine Kraftwirkung, welche bei geeigneter Steuerung der Elektromagnete 585 zu einer Beschleunigung, Abbremsung oder konstanten Bewegung des Transportelements entlang der Führungsschiene 530 führt. Das hier dargestellte Reaktionselement 570 des Transportelements besteht aus drei alternierend senkrecht zur Führungsschiene angeordneten Permanentmagneten, wobei die Breite des mittleren Permanentmagneten in etwa dem Abstand zweier benachbarter elektrischer Wicklungen des Langstators entspricht und die Breite der äußeren Permanentmagneten etwa jeweils der Hälfte des Abstands der benachbarten elektrischen Wicklungen entspricht. Bei alternierender Polung benachbarter Elektromagnete des Langstators kann somit eine maximale Kraft auf das Reaktionselement entlang der Führungsschiene ausgeübt werden. Durch individuelles Ansteuern der Elektromagnete 585 kann das Transportelement 540 mit einer vorgegebenen Geschwindigkeit V entlang der Führungsschiene 530 bewegt werden. In der hier dargestellten, nicht limitierenden Ausführungsform ist das Transportelement 540 mittels eine Gleitlagers 590 an der Führungsschiene 530 gelagert. Des Weiteren weist das Transportelement 540 eine Greifvorrichtung 580 auf.

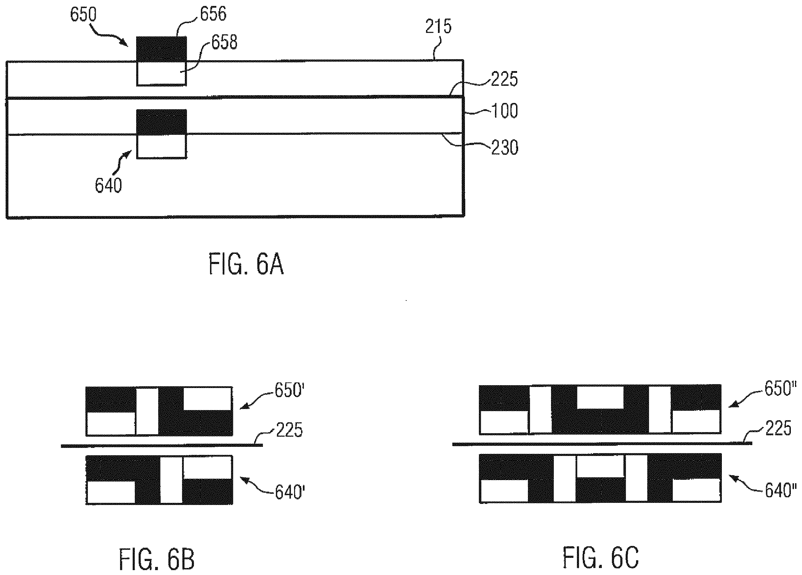

Die magnetische Kopplung des inneren Transportelements an das äußere Transportelement, wie in Figur 3 dargestellt, kann durch eine Vielzahl von Varianten zur Anordnung der an den Transportelementen angebrachten magnetischen Kopplungselemente erzielt werden. Der einfachste Fall ist in Figur 6A schematisch dargestellt, wobei hier lediglich die magnetischen Kopplungselemente als repräsentativ für das innere Transportelement 640 und das äußere Transportelement 650 dargestellt sind. In diesem Fall werden die magnetischen Kopplungselemente jeweils durch einen magnetischen Dipol in Form eines Permanent- oder Elektromagneten gebildet, von dem der eine Pol 656 schwarz, und der andere, komplementäre Pol 658 weiß dargestellt ist. Die Dipole sind auf beiden Seiten des Wandelements 225 derart angeordnet, dass sich stets komplementäre Pole gegenüber stehen. Dadurch wird die magnetische Anziehungskraft, und damit die magnetische Kopplung, zwischen den beiden Transportelementen maximiert. Des Weiteren zeigt die Figur schematisch die äußere Führungsschiene 215, die innere Führungsschiene 230 und den dick umrandeten Isolator 100.

Verbesserte Ausführungsformen sind in den Figuren 6B und 6C dargestellt. Dabei zeigt Figur 6B magnetische Kopplungselemente 650' bzw. 640' des äußeren bzw. inneren Transportelements, welche aus drei jeweils um 90° im bzw. gegen den Uhrzeigersinn zueinander gedrehten Dipolen, entweder aus Permanentmagneten oder aus Elektromagneten, zusammengesetzt sind. Die Anordnung der Einzelmagnete ist dabei derart gewählt, dass sich stets komplementäre Pole auf beiden Seiten des Wandelements 225 gegenüber stehen.

Eine optimierte Ausbildung der magnetischen Kopplungselemente ist in Figur 6C dargestellt, wobei die magnetischen Kopplungselemente 640" und 650" des inneren bzw. äußeren Transportelements in Form eines sog. Halbach-Arrays angeordnet sind, wobei 5 Dipole jeweils um 90° zueinander entlang bzw. entgegen der Bewegungsrichtung gedreht angeordnet sind. Auch hier sind die sich auf beiden Seiten des Wandelements 225 gegenüberstehenden magnetischen Pole komplementär zueinander. Die gezeigte Halbach-Anordnung optimiert die magnetische Kopplung insofern, als durch die Drehung der einzelnen Dipole der magnetische Fluss der Gesamtanordnung fast vollständig auf Seiten des Wandelements 225 konzentriert ist.

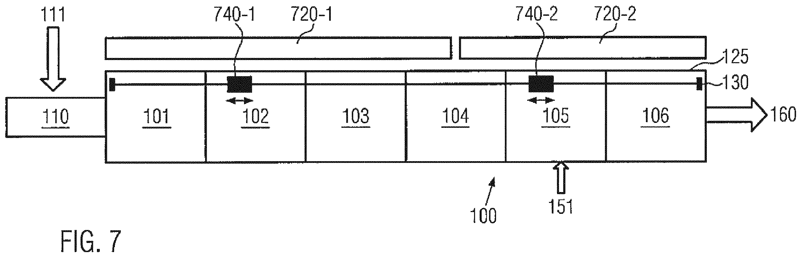

Figur 7 schließlich stellt eine Variante der in Figur 1 dargestellten Vorrichtung dar, wobei das Antriebssystem 120 in zwei Segmente 720-1 und 720-2 unterteilt ist. Die Segmente sind in dieser nicht limitierenden Ausführung derart angeordnet, dass das erste Segment 720-1 den Transport von Vorformlingen bzw. Behältern entlang des der Behälterherstellung dienenden Teils der Prozessstrecke mit den Stationen 101 bis 103 übernimmt, und das zweite Segment 720-2 den Transport der befüllten Behälter von der Füllstation 104 bis zum Ausschleusen der Behälter an eine Behälterabführung 160 übernimmt.

Neben den bereits aus Figur 1 bekannten Elementen zeigt die Figur 7 weiterhin zwei repräsentative innere Transportelemente 740-1 und 740-2, welche mittels des jeweiligen Segments des Antriebssystems entlang der jeweiligen Teilstrecke der Prozessstrecke bewegt werden können. Die Transportelemente 740-1 und 740-2 können hierbei, insbesondere im Hinblick auf ihre Greifvorrichtungen, den speziellen Anforderungen der Teilstrecken und ihrer Behandlungsstationen angepasst sein.

Ebenso können die entlang der Segmente 720-1 und 720-2 eingesetzten Komponenten des Antriebssystems den Anforderungen für den Transport der jeweiligen Vorformlinge zw. Behälter angepasst werden.

So weisen beispielsweise die Vorformlinge bzw. unbefüllten Behälter eine geringere Masse auf als die befüllten Behälter. Aus diesem Grund ist zum Bewegen des inneren Transportelements entlang der Teilstrecke zwischen den Stationen 101 bis 104 eine geringere magnetische Kopplung als zum Transport der befüllten Behälter zwischen der Station 104 und der Behälterabführung 160 ausreichend. So kann beispielsweise das Segment 720-1 mit einem durch einen Riemenantrieb angetriebenen äußeren Transportelement ausgebildet werden, während das Segment 720-2 zum Erzielen einer stärkeren magnetischen Kopplungen mit einem als Langstator ausgebildeten äußeren Antrieb dargestellt werden kann.

Eine Vielzahl alternativer Kombinationen mit zwei oder mehr Segmenten des Antriebssystems und/oder zwei oder mehr Segmenten des inneren Führungselements sind dabei, je nach Anforderungen der Behälterbehandlungs bzw. -herstellungsvorrichtung, vorstellbar. Ebenso können die inneren und äußeren Führungselemente jeweils separate Rückführstrecken (nicht dargestellt) aufweisen, um die jeweiligen Transportelemente vom Ende der jeweiligen Teilstrecke der Prozessstrecke zurück zum Anfang der Teilstrecke zu führen.

Die Übergabe von Behältern bzw. Vorformlingen zwischen verschiedenen Segmenten der Transporteinrichtung kann über die jeweilige Behandlungsstation und/oder ein Transfersystem wie ein Sternrad oder eine Rundläufermaschine erfolgen.

Anders als in den Figuren der Einfachheit halber dargestellt, können die Führungselemente und Antriebssysteme jedoch auch entlang eines Decken- oder Wandelements angeordnet sein, um Zugang zum gesamten Querschnitt der Behälterbehandlungs- bzw. -herstellungsvorrichtung zu erlangen. Zudem können wie oben beschrieben mehrere innere und/oder äußere Führungselemente verwendet werden, um den Durchsatz der Vorrichtung zu erhöhen.

Die Erfindung stellt die folgenden weiteren fünfzehn Weiterbildungen zur Verfügung, wobei von eins ab gezählt wird:
Die Weiterbildung einer Vorrichtung zur Behälterbehandlung und / oder Behälterherstellung mit einem Reinraum und einer Transporteinrichtung zum Transport von Behältern und / oder Vorformlingen entlang einer innerhalb des Reinraums angeordneten Prozessstrecke, wobei der Reinraum ein den Reinraum von einem Außenraum trennendes Wandelement aufweist; und wobei die Transporteinrichtung ein Antriebssystem aufweist, das außerhalb des Reinraums angeordnet und dazu ausgebildet ist, mittels magnetischer oder elektromagnetischer Wechselwirkung durch das Wandelement hindurch ein innerhalb des Reinraums bewegbar angeordnetes inneres Element zu bewegen.

Die Vorrichtung nach der ersten Weiterbildung, wobei die Transporteinrichtung weiterhin ein inneres Führungselement aufweist, das innerhalb des Reinraums entlang des Wandelements angeordnet ist; wobei das innere Element mindestens ein inneres Transportelement umfasst, das an dem inneren Führungselement bewegbar angeordnet ist; und wobei das Antriebssystem dazu ausgebildet ist, das innere Transportelement mittels magnetischer oder elektromagnetischer Wechselwirkung durch das Wandelement hindurch entlang des inneren Führungselements zu bewegen.

Die Vorrichtung nach der ersten oder der zweiten Weiterbildung, wobei das Antriebssystem umfasst: ein äußeres Führungselement, das außerhalb des Reinraums entlang des Wandelements angeordnet ist; und mindestens ein äußeres Transportelement, das an dem äußeren Führungselement bewegbar angeordnet ist; wobei das innere Transportelement und das äußere Transportelement derart ausgebildet sind, dass sie durch das Wandelement hindurch magnetisch aneinander gekoppelt werden können; und wobei das Antriebssystem dazu ausgebildet ist, das äußere Transportelement entlang des äußeren Führungselements zu bewegen.

Die Vorrichtung nach einer der ersten drei Weiterbildungen, wobei die Prozessstrecke eine Spritzvorrichtung zum Herstellen von Vorformlingen und eine Blasvorrichtung zum Umformen der Vorformlinge als Teil einer Einheit zur Herstellung von Kunststoffbehältern umfasst.

Die Vorrichtung nach einer der zweiten bis vierten Weiterbildungen, wobei das innere Transportelement und / oder das äußere Transportelement als Schlitten ausgebildet sind, die insbesondere mittels wenigstens eines Lagerelements aus der Gruppe, die von einer oder mehreren Rollen, einem Gleitlager, einem Kugellager, einer Kugelbuchse, einer Kugelumlaufbuchse und einer Gleitbuchse gebildet wird, an dem jeweiligen Führungselement gelagert sind.

Die Vorrichtung nach der fünften Weiterbildung, wobei das innere Transportelement schmierungsfrei an dem inneren Führungselement gelagert ist.

Die Vorrichtung nach fünften oder sechsten Weiterbildung, wobei das innere Transportelement ein Greifsystem aufweist, welches dazu ausgebildet ist, einen oder mehrere Behälter und / oder Vorformlinge aufzunehmen.

Die Vorrichtung nach der siebten Weiterbildung, weiterhin eine Steuerkurve und / oder einen Stößel zur Steuerung des Greifsystems umfassend, wobei die Steuerkurve und / oder der Stößel innerhalb des Reinraums angeordnet sind, und wobei der Stößel über eine Membran oder einen Balg von einem außerhalb des Reinraums angeordneten Antrieb getrennt angeordnet ist.

Die Vorrichtung nach einer der ersten acht Weiterbildungen, wobei das Antriebssystem einen Linearmotor oder einen Riemenantrieb aufweist.

Die Vorrichtung nach der neunten Weiterbildung, wobei das innere und / oder das äußere Führungselement mindestens zwei Segmente umfassen, und wobei das Antriebssystem für jedes Segment des äußeren Führungselements einen Linearmotor oder einen Riemenantrieb aufweist.

Die Vorrichtung nach der neunten oder zehnten Weiterbildung, wobei das innere Führungselement und / oder das äußere Führungselement mindestens eine Rückführstrecke, die insbesondere ebenfalls entlang des Wandelements angeordnet ist, zum Rückführen des jeweiligen Transportelements umfassen.

Die Vorrichtung nach einer der ersten elf Weiterbildungen, wobei das innere Transportelement und / oder das äußere Transportelement mindestens einen Permanentmagneten und / oder mindestens einen Elektromagneten, insbesondere in Form eines Halbach-Arrays, aufweisen, der derart an dem jeweiligen Transportelement angeordnet ist, dass zwei sich auf beiden Seiten des Wandelements gegenüberliegende Transportelemente magnetisch aneinander gekoppelt werden können.

Die Vorrichtung nach einer der ersten zwölf Weiterbildungen, wobei das Wandelement im Wesentlichen eben ausgebildet ist, und / oder wobei das Wandelement aus einem oder mehreren elektrisch nichtleitenden Materialien gebildet ist.

Die Weiterbildung eines Verfahrens zum Transport von Behältern und/oder Vorformlingen entlang einer in einem Reinraum einer Behälterbehandlungs- und/oder -herstellungsvorrichtung angeordneten Prozessstrecke, mit den folgenden Schritten: Koppeln eines außerhalb des Reinraums an einem äußeren Führungselement bewegbar angeordneten Transportelements an ein innerhalb des Reinraums an einem inneren Führungselement bewegbar angeordnetes Transportelement mittels magnetischer Wechselwirkung durch ein zwischen dem äußeren und dem inneren Führungselement liegendes Wandelement des Reinraums; Bewegen des äußeren Transportelements mittels eines außerhalb des Reinraums angeordneten Antriebssystems entlang des äußeren Führungselements; und Mitführen des inneren Transportelements entlang des inneren Führungselements mittels der magnetischen Kopplung an das bewegte äußere Transportelement.

Das Verfahren nach der vierzehnten Weiterbildung, wobei das innere und / oder das äußere Transportelement mindestens einen Elektromagneten zur Herstellung der magnetischen Kopplung aufweisen, und wobei das Verfahren weiterhin die Schritte umfasst: Lösen der magnetischen Kopplung durch Unterbrechen einer Stromversorgung des mindestens einen Elektromagneten; und Rückführen des inneren und / oder äußeren Transportelements entlang einer inneren und / oder äußeren Rückführstrecke.

## Patentansprüche

1. Vorrichtung zur Behälterbehandlung und / oder Behälterherstellung mit einem Reinraum (100) und einer Transporteinrichtung zum Transport von Behältern und / oder Vorformlingen entlang einer innerhalb des Reinraums (100) angeordneten Prozessstrecke,
wobei der Reinraum (100) ein den Reinraum (100) von einem Außenraum trennendes Wandelement (125, 225) aufweist;
wobei die Transporteinrichtung eine innere Transportbahn mit einem inneren Führungselement (130, 230, 530) aufweist, das innerhalb des Reinraums (100) entlang des Wandelements (125, 225) angeordnet ist, und an dem mindestens ein inneres Transportelement (240, 340, 540, 640) zum Transport eines oder mehrerer Behälter oder Vorformlinge bewegbar angeordnet ist;
wobei die Transporteinrichtung ein Antriebssystem (120) mit wenigstens einem parallel zum inneren Führungselement angeordneten Linearmotorstrang aufweist, das außerhalb des Reinraums (100) angeordnet und dazu ausgebildet ist, mittels magnetischer oder elektromagnetischer Wechselwirkung durch das Wandelement (125, 225) hindurch das innere Transportelement (240, 340, 540, 640) entlang des inneren Führungselements (130, 230, 530) zu bewegen.

2. Vorrichtung nach Anspruch 1, wobei das innere Transportelement (240, 340, 540, 640) einen oder mehrere Permanentmagnete und/oder nicht schaltende Elektromagnete, insbesondere in Form eines Halbach-Arrays (640", 650"), zur magnetischen oder elektromagnetischen Wechselwirkung mit dem Antriebssystem (120) aufweist.

3. Vorrichtung nach Anspruch 1 oder 2, wobei die Prozessstrecke zwei oder mehr Stationen zur Behälterbehandlung und/oder Behälterherstellung umfasst; und
wobei das innere Führungselement (130, 230, 530) durchgehend entlang der Prozessstrecke ausgebildet ist.

4. Vorrichtung nach einem der vorhergehenden Ansprüche, wobei an der inneren Transportbahn eine Lokalisierungseinheit, insbesondere mit einer Vielzahl von entlang der inneren Transportbahn angeordneter Sensoren, zum Bestimmen einer Position des inneren Transportelements an der inneren Transportbahn vorgesehen ist.

5. Vorrichtung nach einem der vorhergehenden Ansprüche, wobei das Antriebssystem (120) weiterhin umfasst:
ein äußeres Führungselement (215), das außerhalb des Reinraums (100) entlang des Wandelements (125, 225) angeordnet ist; und
mindestens ein äußeres Transportelement (250, 350, 650), das an dem äußeren Führungselement (215) bewegbar angeordnet ist;
wobei das innere Transportelement (240, 340, 640) und das äußere Transportelement (250, 350, 650) derart ausgebildet sind, dass sie durch das Wandelement (125, 225) hindurch magnetisch aneinander gekoppelt werden können; und
wobei das Antriebssystem (120, 385) dazu ausgebildet ist, das äußere Transportelement (250, 350, 650) entlang des äußeren Führungselements (215) zu bewegen.

6. Vorrichtung nach einem der vorhergehenden Ansprüche, wobei die Prozessstrecke eine Spritzvorrichtung (101) zum Herstellen von Vorformlingen und eine Blasvorrichtung (103) zum Umformen der Vorformlinge als Teil einer Einheit zur Herstellung von Kunststoffbehältern umfasst.

7. Vorrichtung nach einem der vorhergehenden Ansprüche, wobei das innere Transportelement (240, 340, 540, 640) als Schlitten ausgebildet ist, der insbesondere mittels wenigstens eines Lagerelements (242, 342, 352, 590) aus der Gruppe, die von einer oder mehreren Rollen, einem Gleitlager, einem Kugellager, einer Kugelbuchse, einer Kugelumlaufbuchse und einer Gleitbuchse gebildet wird, an dem inneren Führungselement (130, 230, 530; 215) gelagert ist.

8. Vorrichtung nach Anspruch 7, wobei das innere Transportelement (240, 340, 540, 640) schmierungsfrei an dem inneren Führungselement (130, 230, 530) gelagert ist.

9. Vorrichtung nach Anspruch 7 oder 8, wobei das innere Transportelement (240, 340, 540, 640) ein Greifsystem (380, 580) aufweist, welches dazu ausgebildet ist, einen oder mehrere Behälter und / oder Vorformlinge aufzunehmen.

10. Vorrichtung nach Anspruch 9, weiterhin eine Steuerkurve und / oder einen Stößel zur Steuerung des Greifsystems (380, 580) umfassend,
wobei die Steuerkurve und / oder der Stößel innerhalb des Reinraums (100) angeordnet sind, und
wobei der Stößel über eine Membran oder einen Balg von einem außerhalb des Reinraums (100) angeordneten Antrieb getrennt angeordnet ist.

11. Vorrichtung nach einem der Ansprüche 5 bis 10, wobei das äußere Führungselement (215) mindestens zwei Segmente umfasst, und
wobei das Antriebssystem (720-1, 720-2) für jedes Segment des äußeren Führungselements (215) einen separaten Linearmotor aufweist.

12. Vorrichtung nach einem der vorhergehenden Ansprüche, wobei das innere Führungselement (130, 230, 530) und / oder das äußere Führungselement (215) mindestens eine Rückführstrecke, die insbesondere ebenfalls entlang des Wandelements (125, 225) angeordnet ist, zum Rückführen des jeweiligen Transportelements umfassen.

13. Vorrichtung nach einem der vorhergehenden Ansprüche, wobei das Wandelement (125, 225) im Wesentlichen eben ausgebildet ist, und / oder
wobei das Wandelement (125, 225) aus einem oder mehreren elektrisch nichtleitenden Materialien gebildet ist.

14. Verfahren zum Transport von Behältern und / oder Vorformlingen entlang einer in einem Reinraum (100) einer Vorrichtung nach einem der vorhergehenden Ansprüche angeordneten Prozessstrecke, wobei das innere Transportelement (240, 340, 540, 640) mittels der magnetischen oder elektromagnetischen Wechselwirkung durch das Wandelement (125, 225) hindurch mit dem außerhalb des Reinraums angeordneten Antriebssystem (120) entlang des inneren Führungselements (130, 230, 530) bewegt wird.

15. Verfahren nach Anspruch 14,
wobei die Prozessstrecke zwei oder mehr Stationen zur Behälterbehandlung und/oder Behälterherstellung umfasst;
wobei das innere Führungselement (130, 230, 530) durchgehend entlang der Prozessstrecke ausgebildet ist; und
wobei das innere Transportelement (240, 340, 540, 640) bei seiner Bewegung entlang des inneren Führungselements einen oder mehrere Behälter und/oder Vorformlinge zwischen den Stationen der Prozessstrecke transportiert.
